# EUROPEAN PATENT APPLICATION

(11) **EP 4 563 415 A1**
(43) Date of publication of application: **04.06.2025**
(21) Application number: 22953004.3
(22) Date of filing: 26.07.2022
(51) Int. Cl.: B60R 16/02

(54) **UPDATING DEVICE FOR EXTERNAL SENSOR AND UPDATING METHOD FOR EXTERNAL SENSOR**

(71) Applicant: Hitachi Astemo, Ltd., Ibaraki 312-8503 (JP)
(72) Inventor: CHIYODA Takayoshi, Hitachinaka-shi, Ibaraki 312-8503 (JP)
(74) Representative: MERH-IP Matias Erny Reichl Hoffmann Patentanwälte PartG mbB
(86) International application number: PCT/JP2022/028712
(87) International publication number: WO 2024/023906

(57) **Abstract**

An updating device for an external sensor according to an aspect of the present invention includes: a receiver that receives, from a vehicle, failure information on an external sensor mounted on the vehicle and environment information at a point where the failure has occurred; an update parameter determiner that determines an update parameter to be used for updating a parameter of the external sensor in accordance with the failure information and the environment information; an update timing adjuster that determines an update timing for updating the parameter in the vehicle in accordance with the failure information; and a transmitter that transmits the update parameter to the vehicle based on the update timing determined by the update timing adjuster.

## Description

### Technical Field

The present invention relates to an updating device for an external sensor for updating a parameter of the external sensor mounted on a mobile body and an updating method for the external sensor.

### Background Art

In recent years, advanced driving assistance systems (ADAS) and automatic driving (AD) systems have been actively studied to realize a safe and comfortable vehicular society. Although a plurality of external sensors is required for these systems, the systems are often adjusted only in a direction of a traveling lane or at a level of a speed unit, and thus an optimal system application is required for each region. For example, when a camera is used as the external sensor, an adjustment target is a parameter reflected in a control program of the camera. For example, light exposure (brightness gain) of the camera in a snowy country is set to a smaller value than that in a region where no snow falls.

PTL 1 discloses a processor including: a determination unit that determines a predetermined state of a vehicle and surrounding environment based on user vehicle data indicating a state of the vehicle and a surrounding environment when a user uses the vehicle; a calculation unit that calculates a similarity between the predetermined state of the vehicle and the surrounding environment and a state of the vehicle and a surrounding environment indicated in a scenario of a vehicle traveling test; and an output unit that calculates and outputs a result calculated by the calculation unit.

### Citation List

### Patent Literature

PTL 1: WO 2021/186673 A

### Summary of Invention

### Technical Problem

Although the technique described in PTL 1 is a mechanism for creating and calculating a combination of parameters of external sensors based on a calculation result of similarity, there is no reflection method for a vehicle that has caused a sensor failure. Although the technique described in PTL 1 is useful at a stage of development and verification, the parameters are desired to be applied to and reflected on a vehicle used in an actual environment. Simply reflecting parameters at the stage of development and verification on an actual vehicle may not be suitable for use environment of the vehicle.

In view of the above situation, a method for reflecting a parameter on an actual vehicle is desired, the parameter corresponding to an environment in which a failure has occurred in an external sensor.

### Solution to Problem

To solve the above problem, an updating device for an external sensor according to an aspect of the present invention includes: a receiver that receives, from a vehicle, failure information on an external sensor mounted on the vehicle and environment information at a point where the failure has occurred; an update parameter determiner that determines an update parameter to be used for updating a parameter of the external sensor in accordance with the failure information and the environment information; an update timing adjuster that determines an update timing for updating the parameter in the vehicle in accordance with the failure information; and a transmitter that transmits the update parameter to the vehicle based on the update timing determined by the update timing adjuster.

### Advantageous Effects of Invention

According to at least one aspect of the present invention, the parameter suitable for the environment in which the failure occurs in the external sensor can be reflected on the external sensor of the actual vehicle at determined appropriate update timing.

Problems, configurations, and effects other than the above will be clarified by the following description of embodiments.

### Brief Description of Drawings

[FIG. 1] FIG. 1 is a block diagram illustrating a configuration example of a control system of an updating device for an external sensor according to a first embodiment of the present invention.
[FIG. 2] FIG. 2 is a diagram illustrating an outline of scene determination processing performed by a scene determiner according to the first embodiment of the present invention.
[FIG. 3] FIG. 3 is a diagram illustrating an outline of update parameter determination processing performed by an update parameter determiner according to the first embodiment of the present invention.
[FIG. 4] FIG. 4 is a diagram illustrating an outline of update timing adjustment processing performed by an update timing adjuster according to the first embodiment of the present invention.
[FIG. 5] FIG. 5 is a block diagram illustrating a configuration example of an update parameter determiner according to a second embodiment of the present invention.
[FIG. 6] FIG. 6 is a diagram illustrating an outline of update parameter determination processing performed by the update parameter determiner according to the second embodiment of the present invention.
[FIG. 7] FIG. 7 is a diagram illustrating a configuration example of an entire system including the updating device for an external sensor according to each of the first and second embodiments and a vehicle as a third embodiment of the present invention.
[FIG. 8] FIG. 8 is a diagram illustrating another configuration example of the entire system including the updating device for an external sensor according to each of the first and second embodiments and the vehicle as the third embodiment of the present invention.
[FIG. 9] FIG. 9 is a block diagram illustrating a hardware configuration example of an updating device for an external sensor according to each of the first to third embodiments of the present invention, an instrument panel, and an electronic controller.

### Description of Embodiments

The outline of the present invention is as follows. The present invention determines an update parameter (e.g., camera exposure information) suitable for a situation (time, a region, driving environment, etc.) at the time of occurrence of a trouble based on data on a trouble caused in a sensor mounted on a vehicle. Then, the present invention determines whether to update a sensor control program for a vehicle traveling based on the update parameter determined, and updates the sensor control program for the vehicle equipped with the corresponding sensor in accordance with the determination result.

Hereinafter, examples of modes for carrying out the present invention (referred to below as "embodiments") will be described with reference to the accompanying drawings. The same components or components having substantially the same function are denoted by the same reference numerals in the present specification and the accompanying drawings to eliminate duplicated description.

### < First Embodiment >

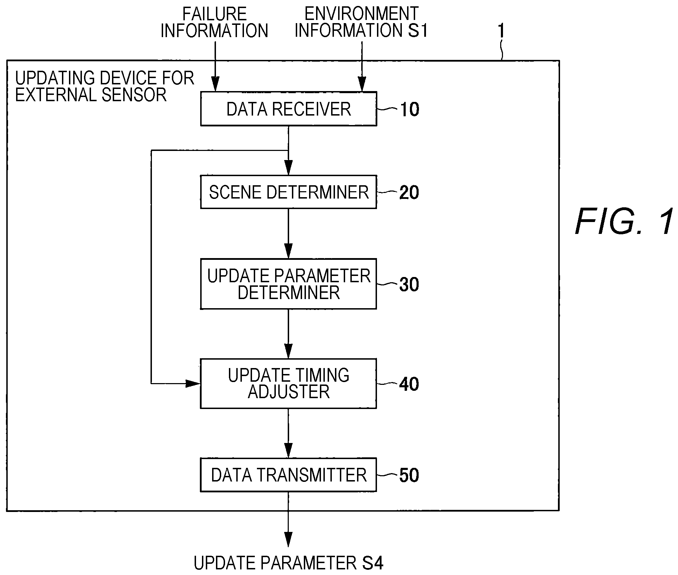

First, a configuration of an updating device for an external sensor according to a first embodiment of the present invention will be described with reference to FIG. 1. The external sensor is installed in a mobile body such as a vehicle and detects information around the mobile body, and is a camera that captures an image around the mobile body, for example.

### [Control system of updating device for an external sensor]

FIG. 1 is a block diagram illustrating a configuration example of a control system of the updating device for an external sensor according to the first embodiment of the present invention. FIG. 1 illustrates an updating device 1 for an external sensor, the updating device 1 being provided in a mobile body such as a vehicle and configured to update a parameter of the external sensor based on failure information (referred to below as "sensor failure information") on the external sensor (not illustrated). The updating device 1 for an external sensor includes a data receiver 10, a scene determiner 20, an update parameter determiner 30, an update timing adjuster 40, and a data transmitter 50.

The data receiver 10 (an example of a receiver) has a function of not only receiving failure information transmitted from the external sensor and environment information S1 on a point where a failure has occurred, but also transmitting the information to the scene determiner 20 and the update timing adjuster 40.

The environment information S1 contributes to reproduction of an environment in which the external sensor has failed. Examples of information to be included in the environment information S1 include a vehicle type, a current sensor parameter, a date and time of sensor failure, a season (month), failure factor information, weather information (weather, temperature, humidity), a current vehicle location (e.g., a global positioning system (GPS) position), and a surrounding environment object (sign, tunnel, white line, vehicle, pedestrian, obstacle). In the present embodiment, sensor function stop (HALT) is handled in the same manner as the sensor failure.

For example, the date and time of sensor failure can be obtained from an in-vehicle electronic control unit (ECU) or an external server (including a satellite positioning system) through a communication network. Examples of the failure factor information include backlight, dirt, rainfall, snowfall, and high temperature. The weather information (in particular, weather) at a travel point can be acquired from outside the vehicle through the communication network. The surrounding environment object can be obtained from an output of the external sensor (e.g., a camera), or map information prepared in advance in the vehicle or the external server (not illustrated) based on position information on the vehicle. The data receiver 10 may receive the environment information S1 in an environment connected by wire or an environment connected by radio to the communication network, and vehicles for which external environment is recognized and collect failure information is collected are not limited in number to one, and any vehicle may be used as long as having the functions of the present embodiment.

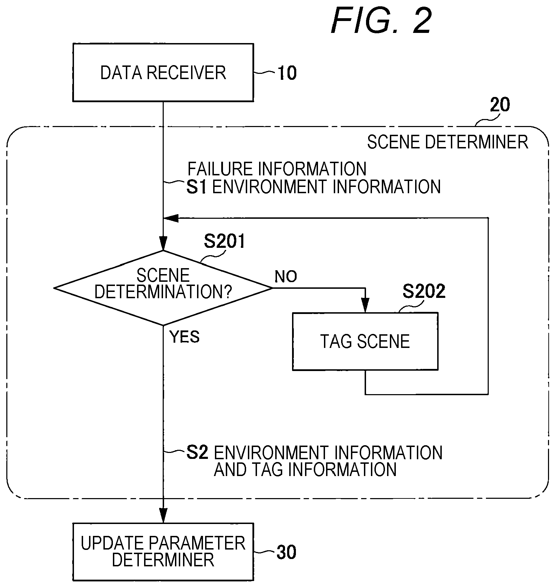

The scene determiner 20 has a function of not only generating the environment information and tag information S2 (see FIG. 2 to be described later) based on the environment information S1 received from the data receiver 10, but also transmitting the environment information and the tag information S2 to the update parameter determiner 30. "Environment information" included in the environment information and the tag information S2 is the same as the environment information S1 received from the data receiver 10.

The update parameter determiner 30 (an example of the update parameter determiner) has a function of not only selecting an update parameter S4 in accordance with the "environment information" from a database in which parameters are accumulated based on the environment information and the tag information S2 received from the scene determiner 20, but also transmitting the selected update parameter S4 to the update timing adjuster 40. The update parameter allows the external sensor to appropriately recognize external environment in actual use environment.

The update timing adjuster 40 (an example of the update parameter adjuster) has a function of calculating a difference (amount of change in parameter) between a parameter before update and an update parameter based on the environment information S1 received from the data receiver 10 and the update parameter S4 received from the update parameter determiner 30. The update timing adjuster 40 has also a function of not only determining whether a parameter can be immediately updated or whether update permission of a user is necessary based on the amount of change in the parameter, but also transmitting the update parameter S4 to the data transmitter 50 when it is determined that the parameter can be immediately updated.

The data transmitter 50 (an example of the transmitter) has a function of transmitting the update parameter S4 received from the update timing adjuster 40 to a connected vehicle through a network to cause an external sensor attached to the vehicle to rewrite the parameter.

Hereinafter, the scene determiner 20, the update parameter determiner 30, and the update timing adjuster 40 will be specifically described. The following description is on the assumption of environment where a vehicle in a region where snow does not fall is transported to a snowy region, and a camera (monocular, stereo, visible light, near infrared, medium infrared, far infrared camera) is used as an external sensor.

### [Scene determination processing]

Next, scene determination processing performed by the scene determiner 20 provided in the updating device 1 for an external sensor will be described with reference to FIG. 2.

FIG. 2 is a diagram illustrating an outline of the scene determination processing performed by the scene determiner 20. When snow adheres to a windshield to stop a camera function of an external sensor stops while a vehicle is traveling in a heavy snow region, the data receiver 10 receives failure information (here, stop information of the camera function) of the external sensor and the environment information S1 at that time from the vehicle. Examples of the environment information S1 include information such as a stop factor (corresponding to the failure factor information), information on a point, date and time, weather, temperature, humidity, wind speed, the number of surrounding vehicles, a white line situation, a position of a guardrail, and the presence or absence of a traffic light.

Then, the scene determiner 20 receives the failure information and the environment information S1 from the data receiver 10. The scene determiner 20 then checks whether a similar scene has occurred in the past, in which a camera function stops (S201), by referring to a database (not illustrated) with various past failure information stored, based on the failure information (stop information of the camera function) and the failure factor information (stop factor) included in the environment information S1. The scene here means a scene, a situation, or a condition, and corresponds to a combination of failure information (e.g., a stop of the camera function) and failure factor information (e.g., a stop factor), for example. The database of past failure information is provided in the updating device 1 for an external sensor. When there is no scene similar to the failure information in the past (NO in S201), the scene determiner 20 tags the failure information with the scene based on the environment information S1 (S202), and then performs the scene determination in step S201 again.

In contrast, when there is a scene similar to the failure information in the past (YES in S201), the scene determiner 20 transmits the environment information and the tag information S2 obtained by adding the tag information to the environment information S1 to the update parameter determiner 30 based on the scene registered in the database. "Environment information" of the "environment information and tag information S2" means as in the environment information S1. The tag information indicates an attribute and a feature of the failure information, and the content thereof is substantially the same as the content (e.g., backlight, dirt, etc.) of the failure factor information. Thus, the failure factor information may be directly used as the tag information.

### [Update parameter determination processing]

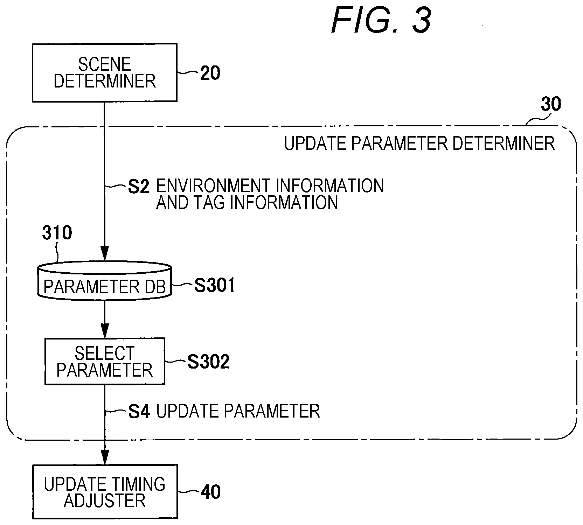

Next, update parameter determination processing performed by the update parameter determiner 30 provided in the updating device 1 for an external sensor will be described with reference to FIG. 3.

FIG. 3 is a diagram illustrating an outline of the update parameter determination processing performed by the update parameter determiner 30. The update parameter determiner 30 refers to a parameter database 301, in which the past parameter is managed for each tag information, based on the environment information and the tag information S2 received from the scene determiner 20 (S301). In the figure, the database is described as "DB". Then, the update parameter determiner 30 selects a parameter suitable for a current point, a season (month), or the like as the update parameter S4 for camera adjustment, for example, from the parameter database 301 (S302). The update parameter determiner 30 adds the latest environment information (i.e., information after the tagging is performed in step S202) and the tag information S2 to the parameter database 301.

When there is no parameter that matches the current situation in the parameter database 301, the update parameter determiner 30 selects a parameter having the closest situation among the parameters registered in the parameter database 301 or selects a parameter having a preset default value. Examples of when there is no parameter that matches the current situation in the parameter database 301 include when it is determined in step S201 that there is no past scene in which similar failure information occurred.

As described above, the update parameter determiner (update parameter determiner 30) selects a parameter suitable for the environment information on a point, where the failure has occurred, as the update parameter (update parameter S4) from the parameter database (parameter database 301) in which the parameter of the external sensor is stored in association with the failure information and the environment information (environment information S1). A configuration of selecting a parameter from the database allows the parameter to be selected in accordance with a situation of a failure occurrence by preparing parameters associated with the failure information and the environment information in advance, so that the configuration can be simplified as compared with when complicated simulation is performed.

Performing such update parameter determination processing enables selecting an update parameter for camera adjustment that does not cause a camera stop even in a heavy snow region, for example. The update parameter determiner 30 transmits the selected update parameter S4 to the update timing adjuster 40. Examples of information included in the update parameter S4 include a shutter adjustment time of the camera, an exposure gain adjustment value, and learning values thereof. Examples of the learning values include values such as a shutter adjustment time and an exposure gain adjustment value inferred by a learning model learned to output an appropriate parameter for each external sensor using the environment information and the tag information S2 as inputs. For example, the learning model may be configured using a machine learning model.

Incorporating learning enables a parameter changed from an initial value due to aging deterioration to be finely adjusted in accordance with current environment, for example. Examples of the adjustment include cutting out of an upper region of an output image of a left camera and adjusting a focal length when an angle of view of the left camera of a stereo camera is shifted downward. Adjustment of a cutout region can be handled by software processing.

### [Update timing adjustment processing]

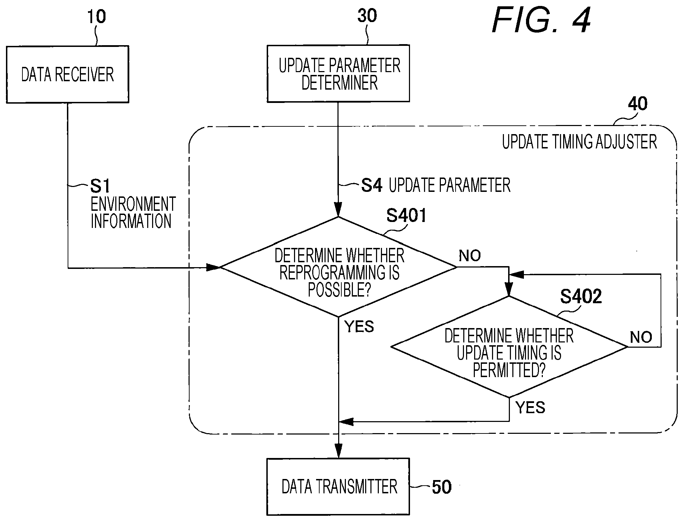

Next, update timing adjustment processing performed by the update timing adjuster 40 provided in the updating device 1 for an external sensor will be described with reference to FIG. 4.

FIG. 4 is a diagram illustrating an outline of the update timing adjustment processing performed by the update timing adjuster 40. The update timing adjuster 40 compares the current sensor parameter included in the environment information S1 received from the data receiver 10 with the update parameter S4 received from the update parameter determiner 30 to determine whether reprogramming is possible (S401).

When a difference between the current sensor parameter and the update parameter S4 is less than a preset threshold (YES in S401), the update timing adjuster 40 transmits the update parameter S4 to the data transmitter 50 due to determination that this difference is minute and thus does not significantly affect behavior of the vehicle. Updating a parameter used in a program is also a type of reprogramming.

In contrast, when the difference between the current sensor parameter and the update parameter S4 is equal to or larger than the threshold (NO in S401), the update timing adjuster 40 determines whether permission of update timing has been obtained (S402).

For example, when a vehicle traveling in a region where snow is less likely to accumulate even in a snowy country moves to a heavy snow region in the snowy country, a condition for obtaining update permission by manual operation of a driver is established. The movement from the environment in which snow is less likely to accumulate to the heavy snow region causes a parameter (e.g., camera parameters) suitable for the external sensor to change greatly, so that movement of the camera attached to the vehicle greatly changes. In this case, it is determined in step S402 that the update is not performed unless the driver permits the update timing instead of automatic update (NO determination in S402). In the case of NO determination in step S402, the update timing adjuster 40 repeats the present determination processing until the update timing permitted by the driver is obtained.

Then, as soon as the update timing permitted by the driver is obtained (YES in S402), the update timing adjuster 40 transmits the update parameter S4 to the data transmitter 50. The update permitted by the driver also can be obtained using an operation panel (e.g., use of an instrument panel) on the vehicle or a mobile terminal connectable to the vehicle.

Upon receiving the update parameter S4 from the update timing adjuster 40, the data transmitter 50 transmits the update parameter S4 (camera parameter) to the vehicle having issued the failure information (stop information on the camera function in this example) to urge the vehicle to rewrite the sensor parameter.

As described above, the updating device for an external sensor (the updating device 1 for an external sensor) according to the first embodiment of the present invention includes: a receiver (the data receiver 10) that receives, from a vehicle, failure information on an external sensor (e.g., a camera) mounted on the vehicle and environment information at a point where the failure has occurred; an update parameter determiner (the update parameter determiner 30) that determines an update parameter to be used for updating a parameter of the external sensor in accordance with the failure information and the environment information (the environment information S1); an update timing adjuster (the update parameter adjuster 40) that determines an update timing for updating the parameter in the vehicle in accordance with the failure information; and a transmitter (the data transmitter 50) that transmits the update parameter to the vehicle based on the update timing determined by the update timing adjuster.

According to the present embodiment configured as described above, the parameter suitable for the environment (the failure information and the environment information S1) in which the failure occurs in the external sensor can be reflected on the external sensor of the actual vehicle at determined appropriate update timing. For example, when not only a target vehicle is in environment different from that in which the target vehicle has previously traveled such as when the vehicle is moved for a reason other than own traveling, but also a function of the external sensor is stopped, the present embodiment causes the parameter used in the software to be changed based on the environment after change, and thus enables the number of times of function stop (HALT) of the external sensor to be reduced. As a result, the driver can drive the vehicle without having unnecessary anxiety about an error displayed on the instrument panel or the like.

### < Second Embodiment >

An updating device for an external sensor according to a second embodiment is provided with a method function of calculating an optimum parameter in accordance with a situation at the time of a sensor failure, the method function being provided by applying a simulator for verifying a function of the external sensor to the update parameter determiner of the updating device 1 for an external sensor (see FIG. 1) according to the first embodiment. Hereinafter, the second embodiment will be described focusing on parts different from the first embodiment.

### [Update parameter determiner]

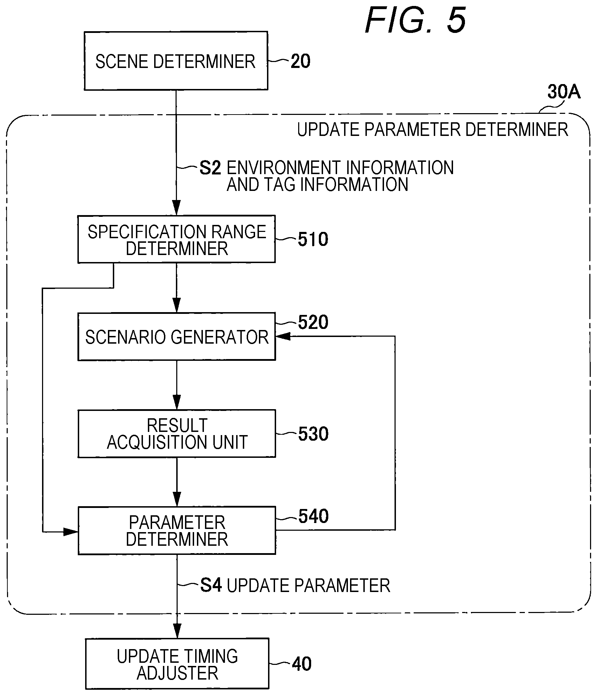

First, a configuration of an update parameter determiner provided in the updating device 1 for an external sensor according to the second embodiment of the present invention will be described with reference to FIG. 5.

FIG. 5 is a block diagram illustrating a configuration example of the update parameter determiner according to the second embodiment of the present invention. FIG. 5 illustrates an update parameter determiner 30A that includes a specification range determiner 510, a scenario generator 520, a result acquisition unit 530, a parameter determiner 540, and a parameter DB 310 (not illustrated, and see FIG. 3) .

The specification range determiner 510 determines whether environment information and tag information S2 received from the scene determiner 20 are within a specification range of the external sensor, and outputs a determination result to the scenario generator 520 or the parameter determiner 540.

The scenario generator 520 generates different test scenarios based on respective test conditions selected in accordance with the failure information and the environment information S1. As described later, the scenario generator 20 generates a verification scene scenario for verifying a situation at the time of a failure occurrence, and an expected value scene scenario expected from the external sensor. The tag information S2 (e.g., a factor of a failure of the external sensor) can be used as a test condition. Using a factor of a failure for the test condition as described above enables determining an update parameter by generating, executing, and comparing a scenario for each factor of the failure. The expected value is not necessarily an ideal value expected from the external sensor, and may be a compromise value (expected value suitable for a current scene). Examples of a case to be said to correspond to the compromise value include a case where an output image of a camera is desired anyway even with image quality sacrificed to some extent.

The result acquisition unit 530 simulates behavior of the external sensor according to each test scenario generated by the scenario generator 520 and acquires an execution result of the simulation. That is, the execution result of the simulation is a recognition result acquired by the external sensor having executed the test scenario.

The parameter determiner 540 determines the update parameter S4 by a method suitable for the determination result of the specification range determiner 510. For example, the parameter determiner 450 compares results obtained by the result acquisition unit 530 having executed the verification scene scenario and the expected value scene scenario to determine the update parameter S4.

### [Update parameter determination processing]

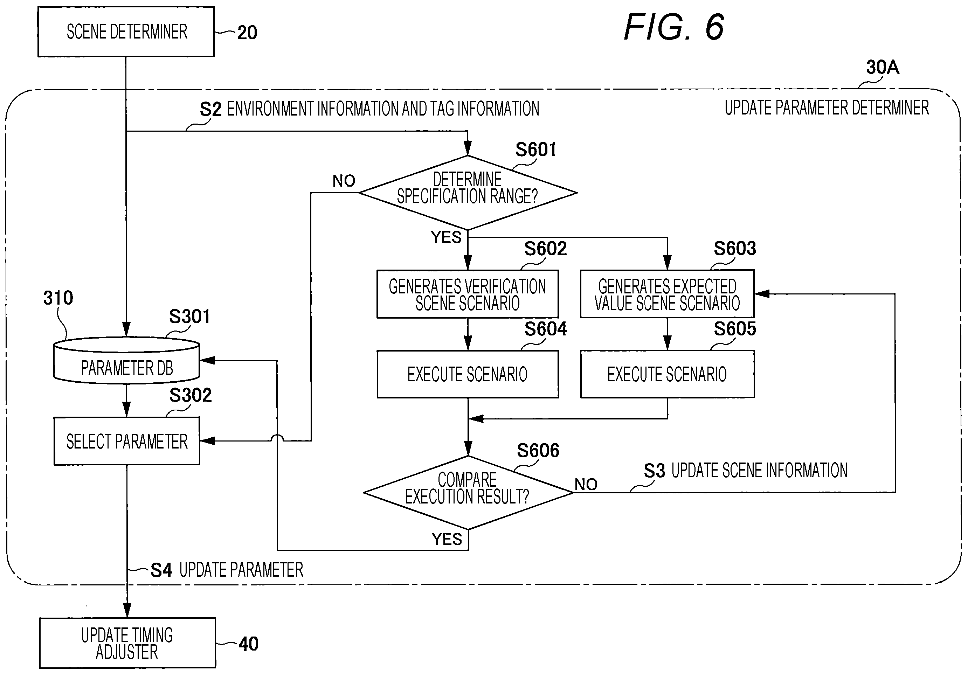

Next, details of update parameter determination processing performed by the update parameter determiner 30A provided in the updating device 1 for an external sensor will be described with reference to FIG. 6.

FIG. 6 is a diagram illustrating an outline of the update parameter determination processing performed by the update parameter determiner 30A. As the update parameter determiner 30A, a simulator for verifying a function of the external sensor is used. The update parameter determination processing of the present embodiment roughly includes not only parameter database reference (S301) and parameter selection (S302), but also specification range determination (S601), verification scene scenario generation (S602), expected value scene scenario generation (S603), scenario execution (S604, S605), and execution result comparison (S606).

The update parameter determiner 30A includes the specification range determiner 510 that receives the environment information and the tag information S2 from the scene determiner 20 when a failure occurs in the external sensor. Then, the specification range determiner 510 checks whether the content of the received environment information and tag information S2 indicates that a factor and a situation of a current camera failure in a camera mounted in the vehicle falls within a range of an original camera specification (S601). When the factor and the situation of the current camera failure do not fall within the range of the original camera specification (NO in S601), a parameter cannot be adjusted, and thus the parameter determiner 540 selects the most approximate parameter value from the parameter database 301 (S302). Here, a value of a parameter is selected, the parameter being associated with environment information within the camera specification range, the environmental information being closest to the environment information S1 in which the camera failure has occurred.

In contrast, when it is determined in step S601 that the factor and the situation of the current camera failure are within the range of the original camera specification (YES determination in S601), processing of acquiring an optimum solution of the parameter is performed. That is, the scenario generator 520 generates the verification scene scenario for reproducing the environment in which the camera failure has occurred based on the environment information and the tag information S2 (S602). The scenario generator 520 generates the verification scene scenario based on the environment information S1 (e.g., current sensor parameters, failure factors, various situations, etc.) at the time of the failure occurrence.

The scenario generator 520 generates also the expected value scene scenario as a comparison target by changing only one parameter to a specification limit value (upper limit value or lower limit value) based on the environment information and the tag information S2 (S603). For example, when the camera function stops (HALT) with 25% of information around the vehicle due to a heavy snow, the camera being originally capable of recognizing 30% of the information, the value of the parameter is first set to enable the camera to recognize 25% of the information, and then the parameter is set so that the amount of information that can be recognized is gradually (e.g., 24%, 23%,...) reduced from the value of the parameter.

When a plurality of parameters exists for the external sensor and the plurality of parameters is changed simultaneously, accurate comparison cannot be performed in comparison of execution results in step S606 described later after the scenario is executed, and thus adjustment of the parameters is difficult. Thus, when a plurality of parameters exists, update parameters are acquired by changing values of the parameters one by one.

Next, the result acquisition unit 530 performs a reproduction test according to each of the verification scene scenario and the expected value scene scenario to simulate (calculate) a recognition result of external environment by using the camera in each reproduction test (S604, S605).

Subsequently, the parameter determiner 540 compares execution results of both the scenarios obtained by the result acquisition unit 530, i.e., the recognition results of the camera (S606).

Here, when the execution result is different between the verification scene scenario and the expected value scene scenario (NO in S606), the parameter determiner 540 proceeds to step S603 to transmit update scene information S3 for relaxing the camera function (relaxing specification value data) to the scenario generator 520. The scenario generator 520 generates a new expected value scene scenario that searches for the specification limit value based on the update scene information S3 (S603), and the result acquisition unit 530 executes the new expected value scene scenario to acquires an execution result (S605). Then, the parameter determiner 540 compares the execution result of the verification scene scenario with that of the new expected value scene scenario again (S606).

The parameter determiner 540 verifies the camera function until the execution results of both the scenarios match each other. When the execution results of both the scenarios match each other (YES in S606), the parameter determiner 540 acquires an optimum value of the camera parameter in the environment information generated and the tag information S2 to update the parameter database 301 (S301). The camera parameter obtained here is a provisional parameter because it is before the parameter selection in step S302.

Next, the parameter determiner 540 selects a parameter suitable for the environment information and the tag information S2, which are received from the scene determiner 20, from the update parameter database 301 as the update parameter S4 for camera adjustment (S302).

Although a method for changing the parameter in a direction in which the function of the external sensor is relaxed from the specification limit value has been described in generation of the expected value scene scenario in step S603, the present invention is not limited to this method. For example, a verification scene and an approximate value of the camera function may be set first, and the parameter may be brought close to the specification limit value from the approximate value by using the update scene information S3. As a specific example, when the specification limit value of the camera function is 20%, the parameter is gradually increased from 0% to 20% of the use limit value, the parameter being changed to increase the amount of information that can be recognized by the camera.

As described above, the updating device for an external sensor (updating device 1 for an external sensor) according to the second embodiment includes the update parameter determiner (update parameter determiner 30A) including: the scenario generator (scenario generator 520) that generates different test scenarios (verification scene scenario, expected value scene scenario) based on the test condition (e.g., a failure factor) selected suitable for the failure information and the environment information (environment information S1); and the result acquisition unit (result acquisition unit 530) that acquires execution results in which behavior of the external sensor is simulated according to each test scenario, in which the execution results of each test scenario are compared to determine the update parameter (update parameter S4).

The present embodiment having the above configuration enables determining an appropriate update parameter suitable for environment by generating different test scenarios suitable for failure information and environment information (environment information S1) and comparing execution results obtained by simulating behavior of the external sensor according to each test scenario.

The update parameter determiner (update parameter determiner 30A) can be specifically configured as follows. The update parameter determiner (update parameter determiner 30A) causes the scenario generator (scenario generator 520) to generate a verification scene scenario for verifying a situation at the time of failure occurrence as the test scenario and an expected value scene scenario expected from an external sensor as the test scenario, and causes the result acquisition unit (result acquisition unit 530) to acquire a result of execution of the verification scene scenario and a result of execution of the expected value scene scenario. Then, the update parameter determiner causes the parameter update unit (parameter update unit 540 to determine the update parameter by comparing the result of execution of the verification scene scenario with the result of execution of the expected value scene scenario.

However, a method for acquiring the optimum parameter is not limited to the example of this embodiment. For example, the updating device 1 for an external sensor may acquire similar information on a failure in another actual vehicle (failure information and environment information) directly from the other actual vehicle or through a server (not illustrated) to set the similar information as the optimum parameter (update parameter).

### < Third Embodiment >

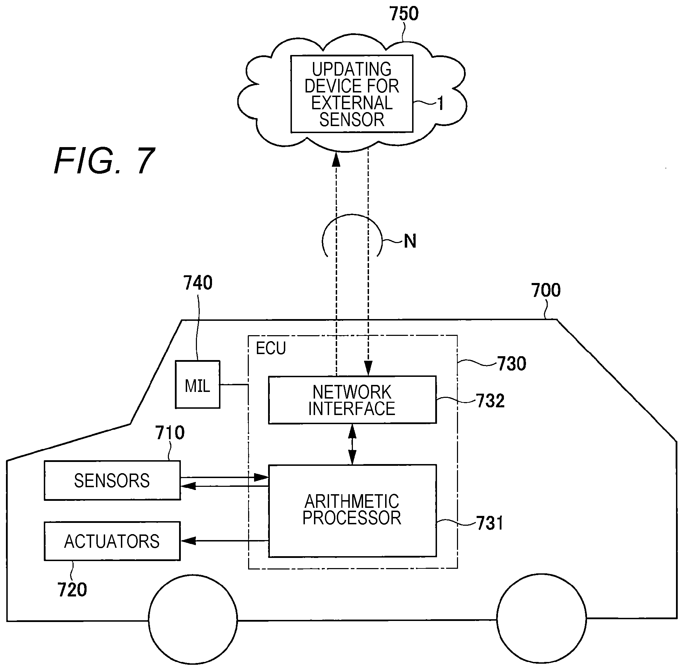

Next, as a third embodiment of the present invention, a configuration of an entire system including an updating device for an external sensor and a vehicle will be described with reference to FIG. 7.

FIG. 7 is a diagram illustrating a configuration example of the entire system including the updating device 1 for an external sensor according to each of the first and second embodiments described above and a vehicle 700. The vehicle 700 illustrated in FIG. 7 is equipped with a driving controller 730 that controls driving of the own vehicle. The driving controller 730 includes an arithmetic processor 731 and a network interface 732. As the driving controller 730, a microcontroller such as an electronic control unit (ECU) is used, for example.

The arithmetic processor 731 performs driving control based on data acquired from sensors 710 including the external sensor, other ECUs (not illustrated), and the like while the vehicle 700 is traveling. Then, the arithmetic processor 731 acquires necessary programs and parameters from the updating device 1 for an external sensor on a cloud 750 using over the air (OTA). The updating device 1 for an external sensor can also be said to be a type of program server.

In general, a vehicle is provided with a plurality of ECUs such as an engine control ECU (not illustrated) and an ECU (ADASECU) for an advanced driver assistance system. The driving controller 730 integrally controls a plurality of ECUs provided in a vehicle 100 to control driving (traveling) of the vehicle 100. The ECUs involved in control of the vehicle herein are also collectively referred to as "vehicle controllers".

The network interface 732 is configured to be able to communicate with the updating device 1 for an external sensor on the cloud 750 through a wide area network N such as the Internet. The network interface 732 is also configured to be able to communicate with another ECU or another device, which is not illustrated, through an in-vehicle network (not illustrated) in the vehicle 700.

Meters such as a speed meter and a malfunction indicator lamp (MIL) are disposed on the instrument panel 740. The instrument panel 740 has not only an output function by display but also an input function of receiving an input operation of the driver, and thus is an example of a driver interface. The output function may be audio output.

The updating device 1 for an external sensor receives not only failure information and environment information S1 (FIG. 1) of the external sensor from the vehicle 700 through the wide area network N, but also a current position of the vehicle, and various types of information such as weather information and map information on the cloud 750. The updating device 1 for an external sensor also communicates with the arithmetic processor 731 of the driving controller 730 through the network interface 732 using the wide area network N. Then, when the updating device 1 for an external sensor transmits the update parameter S4 to the arithmetic processor 731, the arithmetic processor 731 transmits the update parameter S4 to the external sensor among the sensors 710 to update a parameter of the external sensor.

### [Modification of Third Embodiment]

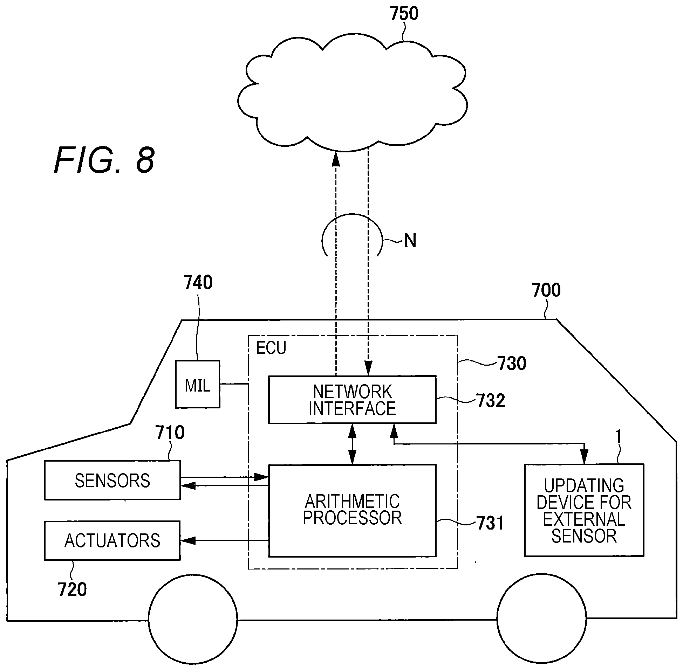

Next, as a modification of the third embodiment of the present invention, another configuration of the entire system including the updating device for an external sensor and the vehicle will be described with reference to FIG. 8.

FIG. 8 is a diagram illustrating another configuration example of the entire system including the updating device 1 for an external sensor according to each of the first and second embodiments described above and the vehicle 700. FIG. 7 illustrates the example in which the updating device 1 for an external sensor is provided inside the vehicle 700 equipped with the external sensor.

The updating device 1 for an external sensor is configured to be able to communicate with the arithmetic processor 731 of the driving controller 730 through the network interface 732 using a wired in-vehicle network such as a controller area network (CAN). A wireless network may be used as a part of the in-vehicle network.

The updating device 1 for an external sensor receives not only failure information and environment information S1 (FIG. 1) of the external sensor from the vehicle 700 through the in-vehicle network, but also a current position of the vehicle, and various types of information such as weather information and map information from the cloud 750. When the updating device 1 for an external sensor transmits the update parameter S4 to the arithmetic processor 731, the arithmetic processor 731 transmits the update parameter S4 to the external sensor among the sensors 710 to update a parameter of the external sensor.

### < Hardware Configuration of Each Device >

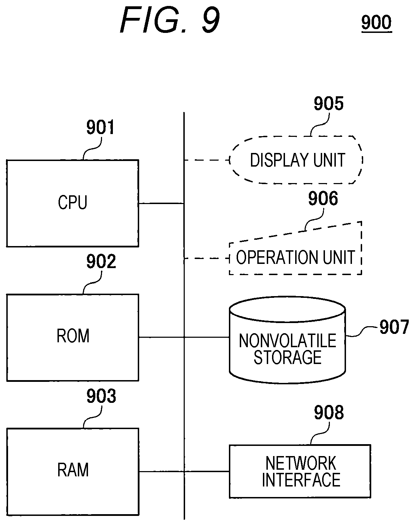

Next, a hardware configuration of the updating device for an external sensor 1 according to each of the first to third embodiments, the instrument panel, and the electronic control unit, which are described above, will be described with reference to FIG. 9.

FIG. 9 is a block diagram illustrating a hardware configuration example of the updating device 1 for an external sensor according to each of the first to third embodiments of the present invention, the instrument panel, and the electronic control unit. A computer 900 is an example of hardware used as a computer operable as the updating device 1 for an external sensor, an instrument panel, and an electronic control unit. The computer 900 includes a central processing unit (CPU) 901, a read only memory (ROM) 902, a random access memory (RAM) 903, a display unit 905, and an operation unit 906, which are each connected to a bus. The computer 900 further includes a nonvolatile storage 907 and a network interface 908.

Each block may be selected in accordance with a function or a purpose of use of each device. For example, the updating device 1 for an external sensor or the electronic control unit may include the computer 900 in a form in which the display unit 905 or the operation unit 906 is not connected.

The CPU 901 reads out a program code of software for implementing each function according to the embodiment described above from the ROM 902, and develops the program code in the RAM 903 to execute the program code. Alternatively, the CPU 901 may directly read out the program code from the ROM 902 to directly execute the program code. The computer 900 may include a processor such as a micro-processing unit (MPU) instead of the CPU 901. Variables, parameters, and the like generated during arithmetic processing performed by the CPU 901 are temporarily written to the RAM 903.

Available examples of the nonvolatile storage 907 include a hard disk drive (HDD), an SSD, a flexible disk, an optical disk, a magneto-optical disk, a CD-ROM, a CD-R, and a nonvolatile memory card. In the nonvolatile storage 907, not only an operating system (OS) and various parameters, but also a program for causing the computer 900 to function, and the like are recorded. The nonvolatile storage 907 also stores a program related to external sensor update processing of the updating device 1 for an external sensor.

Each of functions of the updating device 1 for an external sensor, the instrument panel, and the electronic control unit is implemented by the CPU 901 executing programs corresponding to the functions, the programs being stored in the ROM 902 or the nonvolatile storage 907. The programs are each stored in a form of a program code readable by a computer, and the CPU 901 sequentially executes an operation according to the program code. That is, the ROM 902 or the nonvolatile storage 907 is used as an example of a computer-readable non-transitory recording medium storing a program to be executed by a computer.

The network interface 908 includes a communication device or the like that controls communication with another device such as a server or an ECU. The network interface 908 implements the network interface 732.

### < Modification >

Although an example has been described in each of the embodiments described above, in which a camera is used as an external sensor, the present invention is not limited to this example. The external sensor may be a millimeter-wave radar, a light detection and ranging (LiDAR), a sonar, a time of flight (TOF) sensor, a sensor obtained by combining these sensors, or the like.

In each of the embodiments described above, the present invention is suitably applied to an in-vehicle ECU for vehicle control such as an advanced driver assistance system (ADAS) or autonomous driving (AD). However, the present invention is not limited to the in-vehicle ECU for the ADAS or the AD.

The present invention is further not limited to the embodiments described above, and thus various other application examples and modifications can be obviously taken without departing from the gist of the present invention described in the scope of claims. For example, the above embodiments have been each described for its configuration in detail and specifically to describe the present invention in an easy-to-understand manner, and are not necessarily limited to those having all the components described. Additionally, a part of the configuration of one embodiment can be replaced with a component of another embodiment. Alternatively, a component of the other embodiment can be added to the configuration of the one embodiment. Alternatively, another component can be added to, or replaced with a part of the configuration of each embodiment, or the part can be deleted.

Each configuration, the functions, the processors, and the like described above may be partially or entirely implemented by hardware such as an integrated circuit having been designed. As the hardware, a processor device in a broad sense such as a field programmable gate array (FPGA) or an application specific integrated circuit (ASIC) may be used.

Processing steps each describing time-series processing herein include not only processing performed in time series in the order described, but also processing performed in parallel or individually (e.g., processing performed by an object) even when the processing is not necessarily performed in time series. The processing steps each describing time-series processing may be changed within a range not affecting a processing result.

### Reference Signs List

- 10: data receiver
- 20: scene determiner
- 30: update parameter determiner
- 40: update timing adjuster
- 50: data transmitter
- 100: vehicle
- 310: parameter database
- 510: specification range determiner
- 520: scenario generator
- 530: result acquisition unit
- 540: parameter determiner
- S1: environment information
- S2: environment information and tag information
- S3: update scene information
- S4: update parameter

## Claims

1. An updating device for an external sensor, the updating device comprising:
a receiver that receives, from a vehicle, failure information on an external sensor mounted on the vehicle and environment information at a point where the failure has occurred;
an update parameter determiner that determines an update parameter to be used for updating a parameter of the external sensor in accordance with the failure information and the environment information;
an update timing adjuster that determines an update timing for updating the parameter in the vehicle in accordance with the failure information; and
a transmitter that transmits the update parameter to the vehicle based on the update timing determined by the update timing adjuster.

2. The updating device for an external sensor according to claim 1, wherein
the update parameter determiner includes:
a scenario generator that generates different test scenarios based on respective test conditions selected in accordance with the failure information and the environment information; and
a result acquisition unit that simulates behavior of the external sensor according to each of the test scenarios to acquire an execution result simulated, and
the execution result of each of the test scenarios is compared to determine the update parameter.

3. The updating device for an external sensor according to claim 2, wherein
the update parameter determiner causes the scenario generator to generate a verification scene scenario for verifying a situation at the time of failure occurrence as the test scenario and an expected value scene scenario expected from an external sensor as the test scenario,
the update parameter determiner causes the result acquisition unit to acquire a result of execution of the verification scene scenario and a result of execution of the expected value scene scenario, and
the update parameter determiner determines the update parameter by comparing the result of execution of the verification scene scenario with the result of execution of the expected value scene scenario.

4. The updating device for an external sensor according to claim 2, wherein as the test condition, a factor of a failure of the external sensor is used.

5. The updating device for an external sensor according to claim 1, wherein the update parameter determiner selects a parameter suitable for the environment information on a point, where the failure has occurred, as the update parameter from a parameter database in which the parameter of the external sensor is stored in association with the failure information and the environment information.

6. The updating device for an external sensor according to claim 1, wherein the external sensor is a camera that captures an image around the vehicle.

7. An updating method for an external sensor, the updating method being performed by an updating device for the external sensor and comprising:
processing of receiving, from a vehicle, failure information on an external sensor mounted on the vehicle and environment information at a point where the failure has occurred;
processing of determining an update parameter to be used for updating a parameter of the external sensor in accordance with the failure information and the environment information;
processing of determining an update timing for updating the parameter in the vehicle in accordance with the failure information; and
processing of transmitting the update parameter to the vehicle based on the update timing.
